# EUROPEAN PATENT APPLICATION

(11) **EP 3 012 736 A1**
(43) Date of publication of application: **27.04.2016**
(21) Application number: 13889696.4
(22) Date of filing: 15.07.2013
(51) Int. Cl.: G06F 9/45

(54) **DATA STREAM PROCESSING METHOD, DEVICE AND SYSTEM**

(71) Applicant: Huawei Technologies Co., Ltd., Longgang District Shenzhen, Guangdong 518129 (CN)
(72) Inventor: NI, Hui, Shenzhen Guangdong 518129 (CN); TAN, Shiyong, Shenzhen Guangdong 518129 (CN); CAI, Hui, Shenzhen Guangdong 518129 (CN)
(74) Representative: Pfenning, Meinig & Partner mbB
(86) International application number: PCT/CN2013/079374
(87) International publication number: WO 2015/006901

(57) **Abstract**

Embodiments of the present invention relate to the field of communications technologies and disclose a data flow processing method, a device, and a system, thereby solving a problem of operation interruption caused because a switch device is incapable of processing a corresponding user packet by using a received flow entry that is sent in advance by a control device, and improving working efficiency between network devices. The method includes: sending a request message to a control device, where the request message includes an action parameter requested by a switch device, and an identifier of a to-be-processed packet or a to-be-processed packet; receiving packet processing information that is sent according to the request message by the control device; and executing, according to the packet processing information, an operation corresponding to the to-be-processed packet. The embodiments of the present invention are applied in communications application technologies.

## Description

### TECHNICAL FIELD

The present invention relates to the field of communications technologies, and in particular, to a data flow processing method, device, and system.

### BACKGROUND

In a modern communications network, interconnection and interworking between network elements are implemented by using network devices with various different functions to support various types of network protocols. Each network device includes an internal packet forwarding module and various types of protocol control modules. This distributed manner of deploying control modules makes deployment and management of the network very complex. For example, to modify or upgrade a control parameter, an operation must be manually performed on each device separately. To improve deployment flexibility and manageability of network elements, a concept of software-defined networking SDN (Software-Defined Network) has been proposed in the prior art, that is, decoupling control logic and a forwarding function of a network element device, and deploying the control logic in a centralized manner, so that control and maintain work of a network can be implemented in a simple way by performing an operation on a control plane device, thereby improving management efficiency of the network, simplifying a forwarding device, and helping to achieve high performance and reusability of the forwarding device.

In the prior art, the Openflow protocol is generally used as a protocol that is most typical and most frequently applied in an SDN network. Network elements in the Openflow protocol include a control device Openflow controller (OF Controller for short) and a switch device Openflow switch (OF Switch for short). The control device sends in advance a forwarding action, which is determined according to a packet feature, of a service flow to the switch device in the form of a flow entry, so that the switch device stores the flow entry, and executes a corresponding action list on a subsequent packet that conforms to matching information in the flow entry. However, in some protocol processing processes, information in a flow entry action that is sent in advance by the control device to the switch device is insufficient for processing a user packet received by the switch device, and in this case, the switch device needs to interrupt the operation of executing the action list and requests the controller for required information, but cannot continue to execute an uncompleted action on a returned packet. Consequently, the switch device is incapable of processing a corresponding packet during similar action execution.

### SUMMARY

Embodiments of the present invention provide a data flow processing method, a device, and a system, thereby solving a problem of operation interruption caused because a switch device is incapable of processing a corresponding user packet by using a received flow entry that is sent in advance by a control device, improving working efficiency between network devices, and preventing incorrect processing of packets.

To achieve the objective, the embodiments of the present invention use the following technical solutions:
A first aspect provides a data flow processing method, including:
   sending a request message to a control device, where the request message includes an action parameter requested by a switch device, and an identifier of a to-be-processed packet or a to-be-processed packet;
   receiving packet processing information that is sent according to the request message by the control device; and
   executing, according to the packet processing information, an operation corresponding to the to-be-processed packet.

In a first possible implementation manner, with reference to the first aspect, specifically, before the sending a request message to a control device, the method further includes:
receiving a flow entry that is sent in advance by the control device, and matching the to-be-processed packet according to the flow entry, where the flow entry includes matching information of a data flow and an action list required for the data flow; and
if a corresponding action parameter is found missing when the action list is executed, sending the request message to the control device.

In a second possible implementation manner, with reference to the first aspect or the first possible implementation manner, specifically, the sending a request message to a control device includes:
sending action execution information to the control device by using the request message and/or storing the action execution information locally, where the action execution information includes one or more of an executed action identifier, an unexecuted action identifier, an executed action list, and an unexecuted action list.

In a third possible implementation manner, with reference to the first aspect, the first possible implementation manner of the first aspect, or the second possible implementation manner of the first aspect, specifically, the executing, according to the packet processing information, an operation corresponding to the to-be-processed packet further includes:
acquiring, according to the packet processing information, the to-be-processed packet or the identifier of the to-be-processed packet, the action parameter, the action execution information, and/or an instruction for continuing action execution, and executing the corresponding operation according to the packet processing information.

In a fourth possible implementation manner, with reference to the first aspect or any possible implementation manner of the first aspect, specifically, the packet processing information includes:
at least one of the action parameter, the to-be-processed packet or the identifier of the to-be-processed packet, the action execution information, a to-be-executed action list, and the instruction for continuing action execution.

A second aspect provides a data flow processing method, including:
receiving a request message sent by a switch device, and determining, according to the request message, packet processing information required by the switch device, where the request message includes an action parameter requested by the switch device, and an identifier of a to-be-processed packet or a to-be-processed packet; and
sending the packet processing information to the switch device, so that the switch device executes a corresponding operation according to the packet processing information, where the packet processing information includes at least one of the action parameter, the to-be-processed packet or the identifier of the to-be-processed packet, action execution information, a to-be-executed action list, and an instruction for continuing action execution.

In a first possible implementation manner, with reference to the second aspect, specifically, before the receiving a request message sent by a switch device, and determining, according to the request message, packet processing information required by the switch device, the method further includes:
sending a flow entry to the switch device in advance, where the flow entry includes matching information of a data flow and an action list required for the data flow.

In a second possible implementation manner, with reference to the second aspect or the first possible implementation manner, specifically, the receiving a request message sent by a switch device, and determining, according to the request message, packet processing information required by the switch device includes:
acquiring, according to the request message, a requested parameter corresponding to the request message, configuring a corresponding action list according to the request message, and generating the packet processing information according to the requested parameter and the action list, so that the switch device executes the corresponding operation according to the packet processing information.

A third aspect provides a switch device, including:
a sending unit, configured to send a request message to a control device, where the request message includes an action parameter requested by the switch device, and an identifier of a to-be-processed packet or a to-be-processed packet;
a receiving unit, configured to receive packet processing information that is sent according to the request message by the control device; and
a configuring unit, configured to execute, according to the packet processing information, an operation corresponding to the to-be-processed packet.

In a first possible implementation manner, with reference to the third aspect, specifically, the device includes:
a matching unit, configured to: before the request message is sent to the control device, receive a flow entry that is sent in advance by the control device, and match the to-be-processed packet according to the flow entry, where the flow entry includes matching information of a data flow and an action list required for the data flow; and
the matching unit is further configured to: if a corresponding action parameter is found missing when the action list is executed, send the request message to the control device.

In a second possible implementation manner, with reference to the third aspect or the first possible implementation manner, specifically:
the sending unit is specifically configured to send action execution information to the control device by using the request message and/or store the action execution information locally, where the action execution information includes one or more of an executed action identifier, an unexecuted action identifier, an executed action list, and an unexecuted action list.

In a third possible implementation manner, with reference to the third aspect, the first possible implementation manner of the third aspect, or the second possible implementation manner of the third aspect, specifically, the configuring unit is specifically configured to acquire, according to the packet processing information, the to-be-processed packet or the identifier of the to-be-processed packet, the action parameter, the action execution information, and/or an instruction for continuing action execution, and execute the corresponding operation according to the packet processing information.

In a fourth possible implementation manner, with reference to the third aspect or any possible implementation manner of the third aspect, specifically, the packet processing information includes:
at least one of the action parameter, the to-be-processed packet or the identifier of the to-be-processed packet, the action execution information, a to-be-executed action list, and the instruction for continuing action execution.

A fourth aspect provides a control device, including:
a configuring unit, configured to receive a request message sent by a switch device, and determine, according to the request message, packet processing information required by the switch device, where the request message includes an action parameter requested by the switch device, and an identifier of a to-be-processed packet or a to-be-processed packet; and
a sending unit, configured to send the packet processing information determined by the configuring unit to the switch device, so that the switch device executes a corresponding operation according to the packet processing information, where the packet processing information includes at least one of the action parameter, the to-be-processed packet or the identifier of the to-be-processed packet, action execution information, a to-be-executed action list, and an instruction for continuing action execution.

In a first possible implementation manner, with reference to the fourth aspect, specifically:
the sending unit is further configured to: before the request message sent by the switch device is received and the packet processing information required by the switch device is determined according to the request message, send a flow entry to the switch device in advance, where the flow entry includes matching information of a data flow and an action list required for the data flow.

In a second possible implementation manner, with reference to the fourth aspect or the first possible implementation manner, specifically, the configuring unit includes:
a configuring subunit, configured to acquire, according to the request message, a requested parameter corresponding to the request message, configure a corresponding action list according to the request message, and generate the packet processing information according to the requested parameter and the action list, so that the switch device executes the corresponding operation according to the packet processing information.

A fifth aspect provides a switch device, including: a processor and a memory that are connected by using a data bus, and at least one communications interface that is connected to the processor and the memory separately, where:
the processor is configured to send a request message to a control device by using the at least one communications interface, where the request message includes an action parameter requested by the switch device, and an identifier of a to-be-processed packet or a to-be-processed packet;
the processor is further configured to receive, by using the at least one communications interface, packet processing information that is sent according to the request message by the control device; and
the processor is further configured to execute, according to the packet processing information, an operation corresponding to the to-be-processed packet.

In a first possible implementation manner, with reference to the fifth aspect, specifically:
the processor is further configured to: before sending the request message to the control device by using the at least one communications interface, receive, by using the at least one communications interface, a flow entry that is sent in advance by the control device, and match the to-be-processed packet according to the flow entry, where the flow entry includes matching information of a data flow and an action list required for the data flow,; and
the processor is further configured to: if a corresponding action parameter is found missing when the action list is executed, send the request message to the control device by using the at least one communications interface.

In a second possible implementation manner, with reference to the fifth aspect or the first possible implementation manner, specifically,
the processor is further configured to send, by using the at least one communications interface, action execution information to the control device by using the request message and/or store the action execution information locally by using the memory, where the action execution information includes one or more of an executed action identifier, an unexecuted action identifier, an executed action list, and an unexecuted action list.

In a third possible implementation manner, with reference to the fifth aspect, the first possible implementation manner of the fifth aspect, or the second possible implementation manner of the fifth aspect, specifically:
the processor is further configured to acquire, according to the packet processing information, the to-be-processed packet or the identifier of the to-be-processed packet, the action parameter, the action execution information, and/or an instruction for continuing action execution, and execute the corresponding operation according to the packet processing information.

In a fourth possible implementation manner, with reference to the fifth aspect or any possible implementation manner of the fifth aspect, specifically, the packet processing information includes:
at least one of the action parameter, the to-be-processed packet or the identifier of the to-be-processed packet, the action execution information, a to-be-executed action list, and the instruction for continuing action execution.

A sixth aspect provides a control device, including: a processor and a memory that are connected by using a data bus, and at least one communications interface that is connected to the processor and the memory separately, where:
the processor is configured to receive, by using the at least one communications interface, a request message sent by a switch device, and determine, according to the request message, packet processing information required by the switch device, where the request message includes an action parameter requested by the switch device, and an identifier of a to-be-processed packet or a to-be-processed packet; and
the processor is further configured to send the packet processing information to the switch device by using the at least one communications interface, so that the switch device executes a corresponding operation according to the packet processing information, where the packet processing information includes at least one of the action parameter, the to-be-processed packet or the identifier of the to-be-processed packet, action execution information, a to-be-executed action list, and an instruction for continuing action execution.

In a first possible implementation manner, with reference to the sixth aspect, specifically:
the processor is further configured to: before receiving, by using the at least one communications interface, the request message sent by the switch device, and determining, according to the request message, the packet processing information required by the switch device, send a flow entry to the switch device in advance by using the at least one communications interface, where the flow entry includes matching information of a data flow and an action list required for the data flow.

In a second possible implementation manner, with reference to the sixth aspect or the first possible implementation manner, specifically:
the processor is further configured to acquire, according to the request message, a requested parameter corresponding to the request message, configure a corresponding action list according to the request message, and generate the packet processing information according to the requested parameter and the action list, so that the switch device executes the corresponding operation according to the packet processing information.

A seventh aspect provides a communications system, including a switch device and a control device, where the switch device is the switch device according to the third aspect or any possible implementation manner of the third aspect, and the control device is the control device according to the fourth aspect or any possible implementation manner of the fourth aspect; or
the switch device is the switch device according to the fifth aspect or any possible implementation manner of the fifth aspect, and the control device is the control device according to the sixth aspect or any possible implementation manner of the sixth aspect.

In the data flow processing method, the device and the system that are provided in the embodiments of the present invention, a switch device processes a packet according to a flow entry that is sent by a control device and received in advance, and when interruption occurs for the packet processed by the switch device, the switch device sends a request message to the control device, so that the control device configures, according to the request message, packet processing information that corresponds to the to-be-processed packet of the switch device, and the switch device completes an operation of the to-be-processed packet according to the packet processing information, thereby solving a problem of operation interruption caused because the switch device is incapable of processing a corresponding user packet by using a received flow entry that is sent in advance by the control device, improving working efficiency between network devices, and preventing incorrect processing of packets.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a data flow processing method according to an embodiment of the present invention;
FIG. 2 is a schematic flowchart of another data flow processing method according to an embodiment of the present invention;
FIG. 3 is a schematic flowchart of still another data flow processing method according to an embodiment of the present invention;
FIG. 4 is a schematic flowchart of a data flow processing method according to another embodiment of the present invention;
FIG. 5 is a schematic flowchart of another data flow processing method according to another embodiment of the present invention;
FIG. 6 is a schematic flowchart of still another data flow processing method according to another embodiment of the present invention;
FIG. 7 is a schematic flowchart of still yet another data flow processing method according to another embodiment of the present invention;
FIG. 8 is a schematic structural diagram of a switch device according to an embodiment of the present invention;
FIG. 9 is a schematic structural diagram of another switch device according to an embodiment of the present invention;
FIG. 10 is a schematic structural diagram of a control device according to an embodiment of the present invention;
FIG. 11 is a schematic structural diagram of another control device according to an embodiment of the present invention;
FIG. 12 is a schematic structural diagram of a switch device according to another embodiment of the present invention;
FIG. 13 is a schematic structural diagram of a control device according to another embodiment of the present invention; and
FIG. 14 is a schematic structural diagram of a communications system according to an embodiment of the present invention.

### DESCRIPTION OF EMBODIMENTS

Embodiments of the present invention are applicable to any communications protocol in software-defined networking SDN (Software-Defined Network), and the Openflow protocol is used as an example of a communications protocol involved in the embodiments of the present invention. Network element devices in the Openflow protocol include a control device Openflow controller (OF Controller for short) and a switch device Openflow switch (OF Switch for short), where the OF Controller is responsible for determining a forwarding action of a service flow according to a packet feature, and delivers a corresponding flow entry to the OF Switch, so that the OF Switch acquires and stores the flow entry, and executes a corresponding action list on a subsequent packet that conforms to matching information of the service flow. Herein, we describe solutions by using the Openflow protocol as an example.

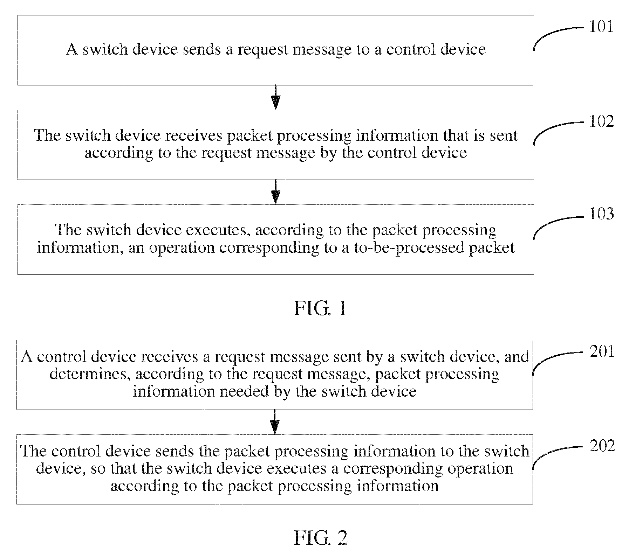

The present invention provides a data flow processing method from the side of a switch device. Referring to FIG. 1, the method includes the following procedures:
101: A switch device sends a request message to a control device.

The request message includes an action parameter requested by the switch device, and an identifier of a to-be-processed packet or a to-be-processed packet.

Herein, before the sending, by a switch device, a request message to a control device, the method further includes:
a. The switch device receives a flow entry that is sent in advance by the control device, and matches the to-be-processed packet according to the flow entry, where the flow entry includes matching information of a data flow and an action list required for the data flow.
   The flow entry includes: flow matching information and a corresponding action list to be executed, where the flow matching information includes an IP quintet and an Ethernet frame header.
   Herein, the flow entry that is received by the switch device and sent in advance by the control device is a forwarding action, which is determined by the control device according to a packet feature, of a service flow that is to be processed by the switch device, where the packet feature includes: an IF quintet, an Ethernet frame header, and a virtual local area network identifier Vlan ID (Virtual Local Area Network Identity), and the forwarding action of the switch device includes: forwarding, discarding, modifying a packet header, encapsulation, and decapsulation.
b. If a corresponding action parameter is found missing when the action list is executed, send the request message to the control device.

102: The switch device receives packet processing information that is sent according to the request message by the control device.

Herein, the switch device receives the packet processing information sent by the control device, so that the switch device can supplement processing information for the to-be-processed packet, and therefore can perform a corresponding operation on the to-be-processed packet by using the packet processing information, where the packet processing information includes the action parameter, the to-be-processed packet or the identifier of the to-be-processed packet, action execution information, and/or a to-be-executed action list, and/or an instruction for continuing action execution.

Optionally, the switch device stores the action parameter that is acquired according to the sent request message.

103: The switch device executes, according to the packet processing information, an operation corresponding to a to-be-processed packet.

Herein, the switch device acquires, according to the received packet processing information, the to-be-processed packet and an action list corresponding to the to-be-processed packet, and executes the corresponding operation according to the acquired to-be-processed packet and the action list corresponding to the to-be-processed packet, so as to complete processing of the to-be-processed packet.

An embodiment of the present invention provides a data flow processing method from the side of a control device. Referring to FIG. 2, the method includes the following procedures:
201: A control device receives a request message sent by a switch device, and determines, according to the request message, packet processing information required by the switch device.

The request message includes a parameter requested by the switch device, and an identifier of a to-be-processed packet or a to-be-processed packet.

Herein, before the receiving, by a control device, a request message sent by a switch device, the method further includes:
sending, by the control device, a flow entry to the switch device in advance, where the flow entry includes matching information of a data flow and an action list required for the data flow.

Herein, the control device formulates in advance a corresponding flow entry by using a packet that is to be processed by the switch device, where the packet that is to be processed by the switch device is presented in the form of a data flow in the Openflow protocol; and the flow entry includes matching information of the data flow and an action list required for the data flow, where the flow entry formulating process may be completed through local configuration by the control device, or may be completed and obtained by the control device according to a received trigger message of another network element.

The action list required for the data flow in the flow entry includes one or more to-be-executed action types and corresponding execution parameters. The action types herein include: one or more actions of forwarding, discarding, queue forwarding, packet modification, encapsulation, and decapsulation.

202: The control device sends the packet processing information to the switch device, so that the switch device executes a corresponding operation according to the packet processing information.

The packet processing information includes at least one of the action parameter, the to-be-processed packet or the identifier of the to-be-processed packet, action execution information, a to-be-executed action list, and an instruction for continuing action execution.

In the data flow processing method provided in this embodiment of the present invention, a switch device processes a packet according to a flow entry that is sent by a control device and received in advance, and when interruption occurs for the packet processed by the switch device, the switch device sends a request message to the control device, so that the control device configures, according to the request message, packet processing information that corresponds to the to-be-processed packet of the switch device, and the switch device completes an operation of the to-be-processed packet according to the packet processing information, thereby solving a problem of operation interruption caused because the switch device is incapable of processing a corresponding user packet by using a received flow entry that is sent in advance by the control device, improving working efficiency between network devices, and preventing incorrect processing of packets.

Specifically, descriptions are given below with reference to specific embodiments.

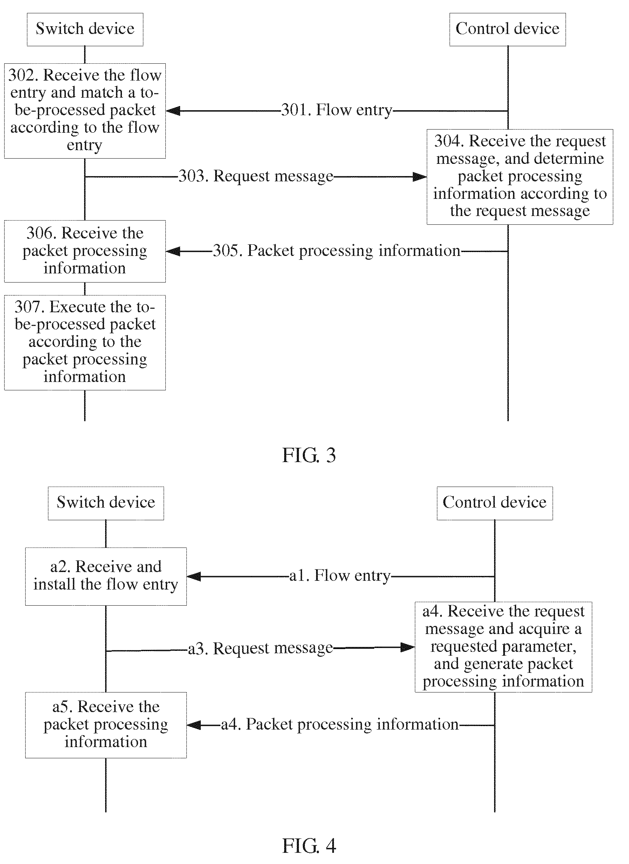

Based on the embodiment shown in FIG. 1 or FIG. 2, referring to FIG. 3, an embodiment of the present invention provides a data flow processing method, which mainly includes: sending, by a switch device, a request message to a control device, and acquiring packet processing information that is configured according to the request message by the control device, so that the switch device executes, according to the packet processing information, an execution operation corresponding to a to-be-processed packet. Referring to FIG. 3, FIG. 3 shows a process in which a switch device performs an operation on a packet according to received packet processing information that is sent by a control device, when interruption occurs during packet processing, and specific steps are as follows:
301: The control device sends a flow entry to the switch device in advance, where the flow entry includes matching information of a data flow and an action list required for the data flow.

Herein, the control device formulates in advance a corresponding flow entry by using a packet that is to be processed by the switch device, so that the switch device executes a corresponding action list in the flow entry by using the flow entry, to process a corresponding packet, where the packet to be processed by the switch device is presented in the form of a data flow in the Openflow protocol; and the flow entry includes matching information of the data flow and an action list required for the data flow, where the flow entry formulating process may be completed through local configuration by the control device, or may be completed and obtained by the control device according to a received trigger message of another network element.

The action list required for the data flow in the flow entry includes one or more to-be-executed action types and corresponding execution parameters. The action types herein include: one or more actions of forwarding, discarding, queue forwarding, packet modification, encapsulation, and decapsulation.

302: The switch device receives the flow entry that is sent in advance by the control device, and matches the to-be-processed packet according to the flow entry.

The flow entry includes the matching information of the data flow and the action list required for the data flow.

Herein, the switch device receives the flow entry sent by the control device, and installs the flow entry into a flow table. When the switch device receives a user packet, the switch device performs matching between the user packet and the flow table, and executes an action corresponding to the flow table on a packet that can match the flow table.

Specifically, the flow entry that is received by the switch device and sent in advance by the control device is a forwarding action, which is determined by the control device side according to a packet feature, of a service flow that is to be processed by the switch device, where the packet feature includes: an IP quintet, an Ethernet frame header, and a virtual local area network identifier Vlan ID (Virtual Local Area Network Identity), and the forwarding action of the switch device includes: forwarding, discarding, modifying a packet header, encapsulation, and decapsulation.

303: If a corresponding action parameter is found missing when the action list is executed, the switch device sends a request message to the control device.

Herein, because the switch device fails to find a to-be-processed packet that matches the flow entry, the switch device sends, to the control device side, a request for a corresponding parameter and an unexecuted action list that are required for the to-be-processed packet.

The request message includes the parameter requested by the switch device, an identifier of the to-be-processed packet or the to-be-processed packet.

304: The control device receives the request message sent by the switch device, and determines, according to the request message, the packet processing information required by the switch device.

Herein, the control device acquires the request message sent by the switch device and acquires a requested parameter by searching locally stored information, or acquires a corresponding request message by sending a request packet to another external network element, where an example of acquiring a corresponding request message by sending a request packet to another external network element is that the control device acquires, by using an Address Resolution Protocol ARP (Address Resolution Protocol) request, a physical address, that is, a MAC (Media Access Control) address, corresponding to the Internet Protocol IP (Internet Protocol) address for interconnection between target networks.

305: The control device sends the packet processing information to the switch device, so that the switch device executes the corresponding operation according to the packet processing information.

The packet processing information includes at least one of the action parameter, the to-be-processed packet or the identifier of the to-be-processed packet, action execution information, a to-be-executed action list, and an instruction for continuing action execution.

306: The switch device receives the packet processing information that is sent according to the request message by the control device.

Herein, the switch device receives the packet processing information sent by the control device, so that the switch device can supplement processing information for the to-be-processed packet, and therefore can perform the corresponding operation on the to-be-processed packet by using the packet processing information.

307: The switch device executes, according to the packet processing information, an operation corresponding to the to-be-processed packet.

Herein, the switch device acquires, according to the received packet processing information, the to-be-processed packet and an action list corresponding to the to-be-processed packet, and executes the corresponding operation according to the acquired to-be-processed packet and the action list corresponding to the to-be-processed packet, so as to complete processing of the to-be-processed packet.

In the data flow processing method provided in this embodiment of the present invention, when interruption occurs during processing of a to-be-processed packet by a switch device, the switch device requests, by using a request message, a control device to configure, according to the request message, a corresponding parameter, so that the switch device receives packet processing information sent by the control device and completes the processing of the to-be-processed packet, thereby solving a problem of operation interruption caused because the switch device is incapable of processing a corresponding user packet by using a received flow entry that is sent in advance by the control device, improving working efficiency between network devices, and preventing incorrect processing of packets.

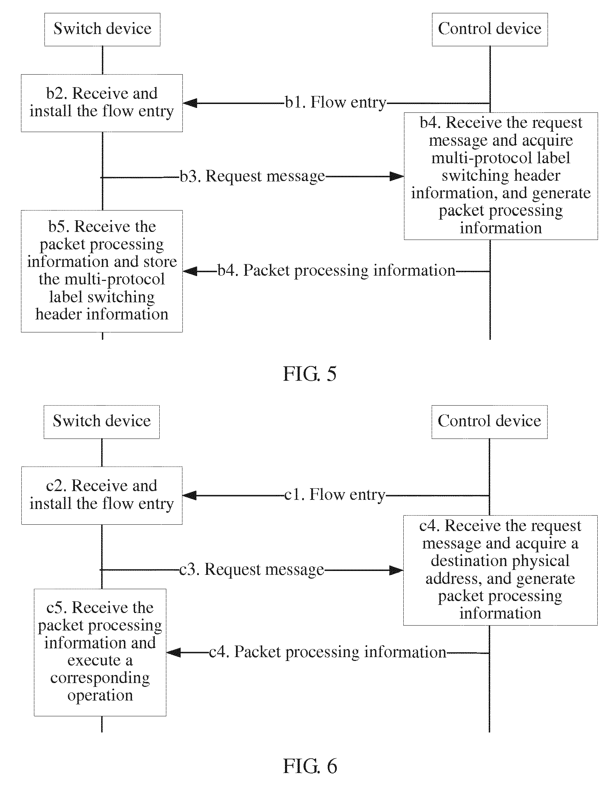

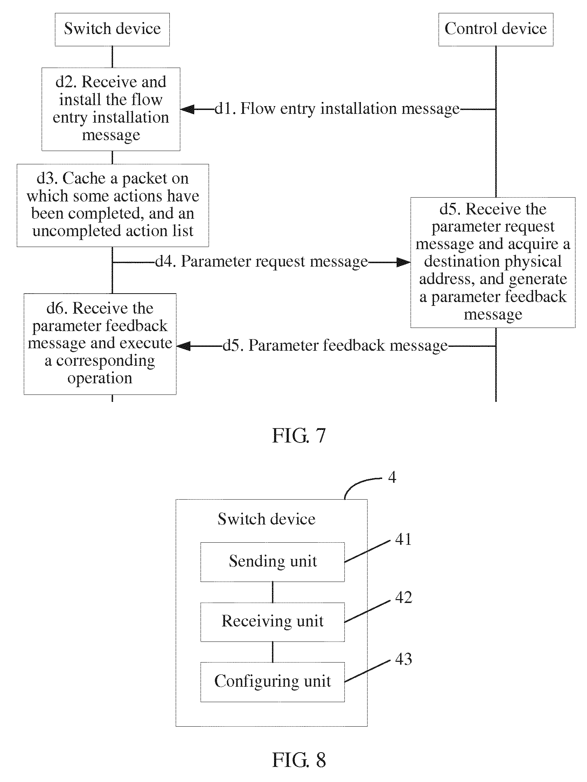

Specifically, the switch device sends the request message to a control device side, so as to receive the packet processing information that is sent according to the request message by the control device and execute an operation corresponding to the to-be-processed packet, where a specific example is shown in FIG. 4, FIG. 5, FIG. 6, or FIG. 7. A control device and a switch device that support the Openflow protocol or a protocol similar to Openflow are used as examples of a control device and a switch device in FIG. 4, FIG. 5, FIG. 6, or FIG. 7, and specific implementation manners are as follows:
A. Referring to FIG. 4, FIG. 4 shows that before executing a GPRS Tunneling Protocol GTP (GPRS Tunnelling Protocol) decapsulation action, a switch device OF Switch (Openflow Switch) requests, by using a request message Packet-in, an action parameter (a destination physical address MAC (Media Access Control) after decapsulation) from an OF Controller (Openflow Controller), and sends an unexecuted action list and a packet buffer identifier to the OF Controller, and the OF Controller delivers the requested MAC address and a to-be-executed action to the OF Switch by feeding back packet processing information Packet-out, so that the OF Switch executes a corresponding action according to the Packet-out.
   a1. The OF Controller formulates in advance a flow entry corresponding to a service flow, and sends the flow entry to the OF Switch by using a flow table message Flow-mod.
      The flow entry includes matching information of a data flow and an action list that needs to be executed for the data flow.
      Herein, formulation of the flow entry is completed through local configuration by the OF Controller or completed according to a received trigger message of another network element by the OF Controller, where the action list includes one or more to-be-executed action types and corresponding execution parameters. The action type includes: forwarding, discarding, queue forwarding, packet modification, encapsulation, or decapsulation. The Flow-mod shown in FIG. 4 is described by using an action list consisting of the following three actions: maximum bandwidth control (2 Mbps)/GTP decapsulation/forwarding (port=2), that is, performing bandwidth control with a maximum bandwidth of 2 Mbps on a packet, then performing GTP decapsulation on the packet, and finally forwarding a packet obtained after the decapsulation is completed through a port 2; and a specific implementation structure of the Flow-mod may be: 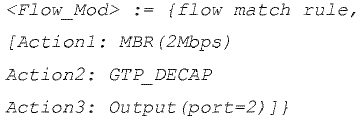
   a2. The OF Switch receives the flow entry delivered in the Flow-mod message and installs the flow entry into a flow table.
      When a user packet received by the OF Switch can satisfy a corresponding packet in the Flow-mod, the OF Switch executes a corresponding action list in the Flow-mod on the user packet. When processing of Action1 is completed, the OF Switch finds that, due to lack of MAC address information corresponding to an inner destination IP (inner-ip) address, the decapsulation action of Action2 fails to be completed. In this case, the OF Switch suspends execution of the action list, temporarily stores the packet to a buffer, and acquires a buffer identifier buffer-id from the buffer.
   a3. The OF Switch sends the request packet Packet-in to the OF Controller to acquire a MAC address corresponding to the inner-ip.
      The request packet Packet-in herein includes a part of or all content of the packet and/or the buffer identifier, a request reason (parameter missing), related information about a requested parameter (a type of the requested parameter, and input information), and the unexecuted action list. A structure of the Packet-in may be shown as follows: 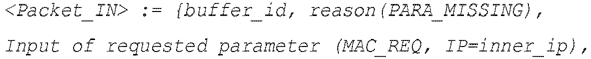 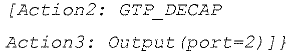
      Content of the unexecuted action list is: "GTP_DECAP", that is, GTP decapsulation. Herein, a possible structure of the Packet-in message includes the buffer identifier "buffer_id", the request reason, that is, parameter missing "PARA_MISSING", and the information about the requested parameter: "MAC_REQ, IP=inner_ip".
   a4. The OF Controller receives the request packet Packet-in packet that is sent by the OF Switch, to acquire the requested parameter, and feeds back the packet processing information Packet-out to the OF Switch.
      Herein, the OF Controller acquires a requested parameter in a corresponding Packet-in message by searching locally stored information, or by sending a request packet to another external network element. The OF Controller sends, by using the Packet-out, the unexecuted action list acquired from the OF Switch to the OF Switch.
      A possible structure of the Packet-out message is shown as follows: 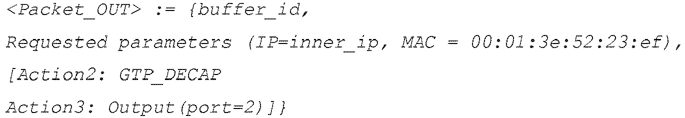
      The Packet-out message includes: the buffer identifier buffer_id of the OF Switch; the parameter requested by the OF Switch, that is, a destination MAC address "00:01:3e:52:23:ef"; and an unexecuted action "GTP_DECAP", that is, GTP decapsulation.
   a5. The OF Switch stores, according to the received Packet-out message, the MAC address corresponding to the inner-ip.
      Herein, the OF Switch acquires a temporarily stored packet corresponding to the buffer-id, and executes the unexecuted action list carried in the Packet-out message on the temporarily stored packet, that is, performs GTP decapsulation and performs forwarding through the port 2. For a packet corresponding to a subsequent service data flow, because the OF Switch has stored the MAC address corresponding to the inner-ip, the OF Switch does not need to request a parameter from the OF Controller again.
      Herein, the OF Switch may transmit information about the to-be-processed packet by using the buffer-id, or may transmit a part of or a whole packet to the OF Controller.
B. Referring to FIG. 5, FIG. 5 shows that before executing an IP security IPsec (IP security) decapsulation action, a switch device OF Switch (Openflow Switch) requests, by using a request message Packet-in, an action parameter (multi-protocol label switching MPLS (Multi-Protocol Label Switching) corresponding to a service flow after decapsulation) from an OF Controller (Openflow Controller), and sends an executed action identifier and a packet buffer identifier to the OF Controller, and the OF Controller delivers a requested MPLS label and a to-be-executed action to the OF Switch by feeding back packet processing information Packet-out, so that the OF Switch completes action execution. Specifically:
   b1. The OF Controller formulates in advance a flow entry corresponding to a service flow, and sends the flow entry to the OF Switch by using a flow table message Flow-mod.
      The flow entry includes matching information of a data flow and an action list that needs to be executed for the data flow.
      The Flow-mod message herein includes an action list consisting of four actions, where the action list may be expressed as: time to live TTL (Time To Live) decrement/IP security IPsec (IP security) decapsulation/MPLS encapsulation/forwarding, that is, first performing TTL decrementon a packet, then IPsec decapsulation on the packet, and finally performing MPLS encapsulation based on a destination IP address on a packet obtained after the decapsulation is completed, and forwarding an encapsulated packet through a port 1. A structure of the flow table message Flow-mod may be as follows: 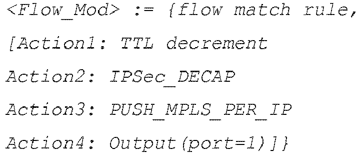
   b2. The OF Switch receives the flow table message Flow-mod and installs the Flow-mod into a flow table.
      Herein, when the OF Switch performs matching between a received user packet and an execution flow table that corresponds to the packet, if the user packet can match a packet indicated in the Flow-mod, the OF Switch executes an action list operation in a corresponding flow entry on the user packet. After the OF Switch completes processing of Action1 or Action2, if the OF Switch finds that there is a lack of MPLS header information corresponding to an inner destination IP (inner-ip) address, the MPLS encapsulation action of Action3 fails to be completed. In this case, the OF Switch suspends execution of the action list, temporarily stores the packet to a buffer, and acquires a buffer identifier buffer-id.
   b3. The OF Switch sends the request packet Packet-in to the OF Controller to acquire the MPLS header information corresponding to the inner-ip.
      The request packet Packet-in herein includes a part of or all content of the packet and/or the buffer identifier, a request reason (parameter missing), related information about a requested parameter (a type of the requested parameter, and input information), and the executed action identifier. A possible structure of the Packet-in is shown as follows: 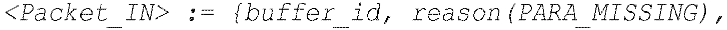 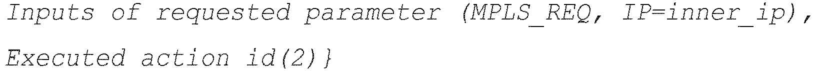
      The executed action identifier is: "Executed action id(2)", that is, an executed action whose id number is 2. Herein, a possible structure of the Packet-in message includes the buffer identifier "buffer_id", the request reason, that is, parameter missing "PARA_MISSING", and the information about the requested parameter: "MPLS_REQ, IP=inner_ip", that is, the MPLS header information.
   b4. The OF Controller receives the request packet Packet-in packet that is sent by the OF Switch, to acquire the requested parameter, and feeds back the packet processing information Packet-out to the OF Switch.
      Herein, the OF Controller determines a to-be-executed action list according to the executed action identifier and a locally stored action list that corresponds to the data flow, and returns the buffer-id, the MPLS header information, and the to-be-executed action list to the OF Switch by using the Packet-out.
      A possible structure of the Packet-out message is shown as follows: 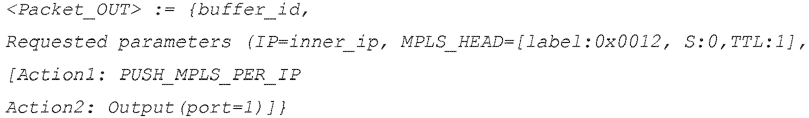
      The Packet-out message includes: the buffer identifier buffer_id of the OF Switch; the parameter requested by the OF Switch, that is, MPLS header information: MPLS_HEAD=[label:0x0012, S:0,TTL:1; and the to-be-executed action list PUSH_MPLS_PER_IP, that is, MPLS encapsulation.
   b5. The OF Switch stores, according to the received Packet-out message, the MPLS header information corresponding to the inner-ip.
      Herein, the OF Switch acquires a temporarily stored packet corresponding to the buffer-id, and executes an unexecuted action list carried in the Packet-out message on the packet, that is, performs MPLS encapsulation and performs forwarding through the port 1.
      Herein, the embodiments corresponding to FIG. 5 and FIG. 4 differ in that, in the embodiment corresponding to FIG. 4, an OF Switch sends an unexecuted action list to an OF Controller by using a Packet-in message, while in the embodiment corresponding to FIG. 5, the OF Switch sends an executed action identifier to the OF Controller by using a Packet-in message; in this way, when the embodiment corresponding to FIG. 5 is compared with the embodiment corresponding to FIG. 4, in the embodiment corresponding to FIG. 5, the OF Switch can execute, after receiving a corresponding Packet-out message fed back by the OF Controller, a corresponding operation on a data flow directly according to an uncompleted action list.
      The embodiments corresponding to FIG. 5 and FIG. 4 are the same in that, a user packet buffer identifier buffer-id is used to transmit information of a to-be-processed packet, and all or a part of content of the to-be-processed packet may also be carried in step 3 and step 5, where the content is used by the OF Switch to execute an action on the packet after the OF Switch acquires an action parameter.
C. Referring to FIG. 6, FIG. 6 shows that before executing a GPRS Tunneling Protocol GTP (GPRS Tunnelling Protocol) encapsulation action, a switch device OF Switch (Openflow Switch) requests, by using a request message Packet-in, an action parameter (a destination physical address MAC (Media Access Control) after encapsulation) from an OF Controller (Openflow Controller), and sends an unexecuted action identifier and a to-be-processed packet to the OF Controller, and the OF Controller delivers the to-be-processed packet, the requested action parameter, and an indication for continuing action execution to the OF Switch by feeding back packet processing information Packet-out, so that the OF Switch completes action execution. Specifically:
   c1. The OF Controller formulates in advance a flow entry corresponding to a service flow, and sends the flow entry to the OF Switch by using a flow table message Flow-mod.
      The flow entry includes matching information of a data flow and an action list that needs to be executed for the data flow.
      The Flow-mod message herein includes an action list consisting of three actions, where the action list may be expressed as: maximum bandwidth control (1 Mbps)/GTP encapsulation (src ip=192.168.0.1, dst ip=192.168.0.2, TEID=0x00000021)/forwarding (port=2), that is, first performing bandwidth control with a maximum bandwidth of 1 Mbps on a packet, then performing GTP encapsulation on the packet, and finally forwarding, through a port 2, a packet obtained after the encapsulation is completed. A structure of the flow table message Flow-mod may be as follows: 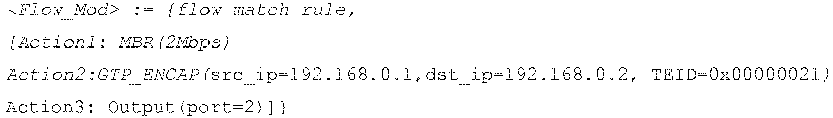
   c2. The OF Switch receives the flow table message Flow-mod and installs the Flow-mod into a flow table.
      Herein, when the OF Switch performs matching between a received user packet and an execution flow table that corresponds to the packet, if the user packet can match a packet indicated in the Flow-mod, the OF Switch executes an action list operation in a corresponding flow entry on the user packet. After the OF Switch completes processing of Action1, if the OF Switch finds that, due to lack of a MAC address corresponding to an outer destination IP (outer-ip) address, the GTP encapsulation action of Action2 fails to be completed. In this case, the OF Switch suspends execution of an action list of Action2, temporarily stores the packet to a buffer, and acquires a buffer identifier buffer-id.
   c3. The OF Switch sends the request packet Packet-in to the OF Controller to acquire a MAC address corresponding to the outer-ip.
      The request packet Packet-in herein includes a part of or all content of the packet, a request reason (parameter missing), related information about a requested parameter (a type of the requested parameter, and input information), and the unexecuted action identifier. A possible structure of the Packet-in is shown as follows: 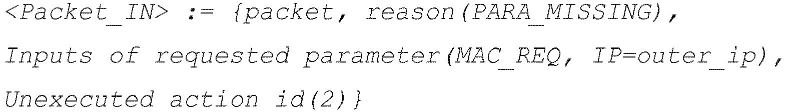
      The Packet-out message includes: the request reason, that is, parameter missing, "reason(PARA_MISSING)"; the parameter requested by the OF Switch, that is, a MAC address "MAC_REQ, IP=outer_ip"; and the unexecuted action identifier, that is, the unexecuted action identifier "Unexecuted action id(2)".
   c4. The OF Controller receives the request packet Packet-in packet that is sent by the OF Switch, to acquire the requested parameter, and feeds back the packet processing information Packet-out to the OF Switch.
      Herein, the OF Controller acquires a requested parameter in a corresponding Packet-in message, that is, acquires the MAC address corresponding to the outer-ip, by searching local packet processing information, or by sending a request packet to another external network element. Then, the OF Controller returns the to-be-processed packet, the requested MAC address, and the unexecuted action identifier or an indication for continuing action processing to the OF Switch by using the Packet-out.
      A possible structure of the Packet-out message is shown as follows: 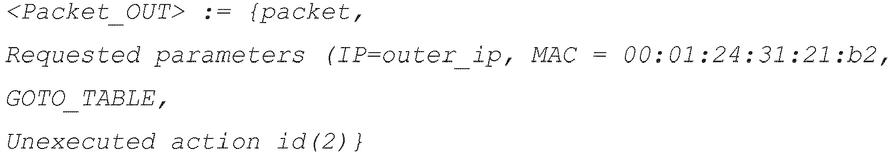
   c5. The OF Switch acquires, according to the received Packet-out message, a to-be-processed user packet and executes a corresponding operation.
      Herein, the OF Switch performs flow table matching for the user packet, and obtains an unexecuted action list of the user packet according to the unexecuted action identifier, that is, performs GTP encapsulation and performs forwarding through the port 2.
      Different from the embodiments corresponding to FIG. 4 and FIG. 5, in the embodiment corresponding to FIG. 6, a part of or all content of a user packet is used, and the content is used by the OF Switch to execute an action on the packet after the OF Switch acquires an action parameter.
      The Packet-in or Packet-out message in the embodiments shown in FIG. 4, FIG. 5 and FIG. 6 is merely an implementation manner of a request message and packet processing information. Another message type may also be used for the packet processing information to implement the function, and no limitation is imposed thereto in the present invention.
D. Referring to FIG. 7, FIG. 7 shows that before executing a Generic Routing Encapsulation GRE (Generic Routing Encapsulation) decapsulation action, a switch device OF Switch (Openflow Switch) requests, by using a parameter request message, an action parameter (source and destination physical addresses MAC (Media Access Control) after encapsulation) from an OF Controller (Openflow Controller), and stores locally a to-be-processed packet and a consistent action. The OF Controller delivers the requested action parameter and an indication for continuing action execution to the OF Switch by feeding back packet processing information, so that the OF Switch completes the action execution. Specifically:
   d1. The OF Controller delivers matching information and an action list of a data flow to the OF Switch by using a flow entry installation message.
      The action list consists of the following three actions: maximum bandwidth control (1 Mbps)/GRE decapsulation/forwarding (port=2), that is, first performing bandwidth control with a maximum bandwidth of 1 Mbps on a user packet, then performing GRE tunneling decapsulation on the user packet, and forwarding, through a port 2, a user packet obtained after the decapsulation is completed. Herein, a possible implementation structure of the flow entry installation message is: 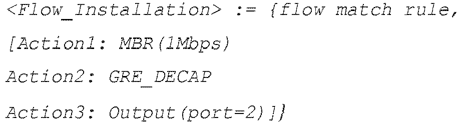
   d2. The OF Switch stores a flow entry sent by the OF Controller into a flow table.
      Herein, the OF Switch executes a corresponding action list on a user packet that can match data flow matching information of the flow entry. After the maximum bandwidth control action is completed, if the OF Switch finds that a MAC address corresponding to a GRE tunneling inner IP address is not known, the GRE tunneling decapsulation action of Action2 fails to be completed. In this case, the OF Switch suspends the GRE tunneling decapsulation action.
   d3. The OF Switch temporarily stores, in a buffer, a packet in which some processing actions have been completed, acquires a buffer identifier buffer-id, and temporarily stores an uncompleted action list in the buffer.
   d4. The OF Switch sends a parameter request message to the OF Controller, to acquire a MAC address corresponding to an inner-ip.
      Herein, the parameter request message includes a packet buffer identifier buffer-id, a request reason (parameter missing), and related information about a requested parameter (a type of the requested parameter, and input information).
      A possible structure of the parameter request message is: 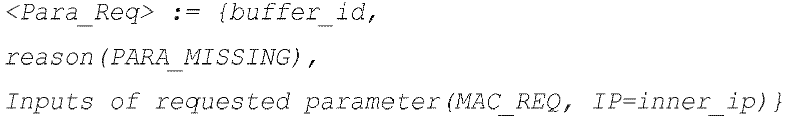
      Herein, the related information about the requested parameter is: "MAC_REQ, IP=inner_ip)", that is, the MAC address corresponding to the inner-ip is requested.
   d5. The OF Controller acquires the MAC address corresponding to the inner-ip by searching local packet processing information, or by sending a request packet to another external network element, and then the OF Controller returns the packet buffer identifier buffer-id and the requested MAC address to the OF Switch by using a parameter feedback message.
      Herein, the OF Controller may also send an indication for continuing action processing to the OF Switch by using the parameter feedback message. A possible implementation structure of the parameter feedback message is as follows: 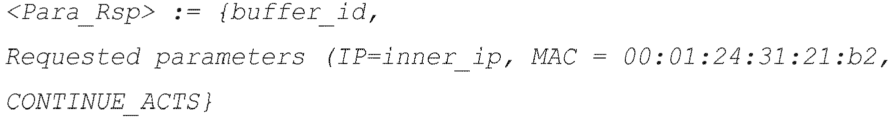
      The parameter feedback message includes: the buffer identifier buffer-id of a user packet, the requested parameter that includes a MAC address "00:01:24:31:21:b2" corresponding to the inner-ip, and the indication for continuing execution.
   d6. The OF Switch acquires, according to the received parameter feedback message, a to-be-processed user packet and executes a corresponding operation.

Herein, the OF Switch reads, from the buffer by using the buffer identifier buffer-id of the user packet, the packet in which some processing actions have been completed, and the uncompleted action list temporarily stored in the buffer, and executes the uncompleted action list by using the indication for continuing action processing, that is, performs GRE decapsulation and performs forwarding from a port 2.

In this embodiment of the present invention, the OF Switch may also temporarily store a completed action list in step 3, and perform flow table matching in step 6 while skipping the completed action list; or does not temporarily store an action list in step 3, but instead, obtains a completed or uncompleted action list or index information by means of transfer through an interface in step 4 or step 5.

Compared with the embodiments shown in FIG. 4, FIG. 5 and FIG. 6, the embodiment shown in FIG. 7 is different from the embodiments shown in FIG. 4, FIG. 5 and FIG. 6 in that, in the embodiment shown in FIG. 7, when a data flow is processed, if an OF Switch lacks a parameter for processing a user packet, the OF Switch temporarily stores, in a buffer, the user packet in which some processing actions have been completed, and also temporarily stores an uncompleted action forwarding list in the buffer, until an OF Controller configures a corresponding parameter and an instruction for continuing execution, so that the OF Switch reads, from the buffer by using a buffer identifier buffer-id, the packet in which some processing actions have been completed, and the uncompleted action list temporarily stored in the buffer, and executes the uncompleted action list by using the indication for continuing action processing.

The embodiments of the present invention further provide an apparatus embodiment for implementing the methods or steps in the foregoing method embodiments.

An embodiment of the present invention provides a switch device 4, where the switch device is specifically any communications device in a communications network system, such as a switch, which is such a device in the communications network system that can implement a data flow processing method, as long as any one of the foregoing data flow processing methods provided in the embodiments of the present invention can be implemented. Referring to FIG. 8, the switch device 5 includes:
a sending unit 41, configured to send a request message to a control device, where the request message includes an action parameter requested by the switch device, and an identifier of a to-be-processed packet or a to-be-processed packet;
a receiving unit 42, configured to receive packet processing information that is sent according to the request message by the control device; and
a configuring unit 43, configured to execute, according to the packet processing information, an operation corresponding to the to-be-processed packet.

In the switch device provided in this embodiment of the present invention, the switch device processes a packet according to a flow entry that is sent by a control device and received in advance, and when interruption occurs for the packet processed by the switch device, the switch device sends a request message to the control device, so that the control device configures, according to the request message, packet processing information that corresponds to the to-be-processed packet of the switch device, and the switch device completes an operation of the to-be-processed packet according to the packet processing information, thereby solving a problem of operation interruption caused because the switch device is incapable of processing a corresponding user packet by using a received flow entry that is sent in advance by the control device, improving working efficiency between network devices, and preventing incorrect processing of packets.

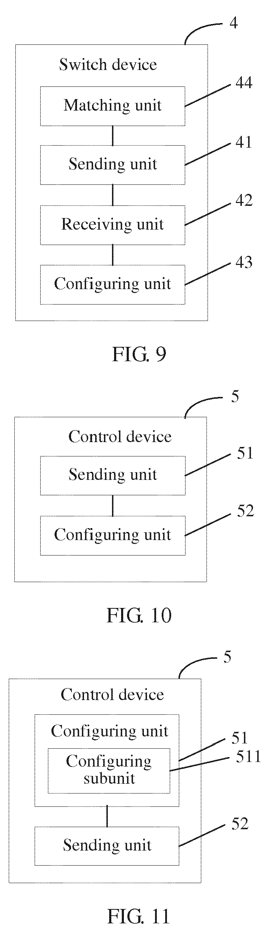

Optionally, referring to FIG. 9, the switch device 4 includes:
a matching unit 44, configured to: before the request message is sent to the control device, receive a flow entry that is sent in advance by the control device, and match the to-be-processed packet according to the flow entry, where the flow entry includes matching information of a data flow and an action list required for the data flow; and
the matching unit 44 is further configured to: if a corresponding action parameter is found missing when the action list is executed, send the request message to the control device.

Further, optionally, the sending unit 41 is specifically configured to send action execution information to the control device by using the request message and/or store the action execution information locally, where the action execution information includes one or more of an executed action identifier, an unexecuted action identifier, an executed action list, and an unexecuted action list.

Optionally, the configuring unit 43 is specifically configured to acquire, according to the packet processing information, the to-be-processed packet or the identifier of the to-be-processed packet, the action parameter, the action execution information, and/or an instruction for continuing action execution, and execute the corresponding operation according to the packet processing information.

Optionally, the packet processing information includes at least one of the action parameter, the to-be-processed packet or the identifier of the to-be-processed packet, the action execution information, a to-be-executed action list, and the instruction for continuing action execution.

In the switch device provided in this embodiment of the present invention, when interruption occurs during processing of a to-be-processed packet by the switch device, the switch device requests, by using a request message, a control device to configure, according to the request message, a corresponding parameter, so that the switch device receives packet processing information sent by the control device and completes the processing of the to-be-processed packet, thereby solving a problem of operation interruption caused because the switch device is incapable of processing a corresponding user packet by using a received flow entry that is sent in advance by the control device, improving working efficiency between network devices, and preventing incorrect processing of packets.

An embodiment of the present invention provides a control device 5, where the control device is specifically any communications device in a communications network system, as long as any one of the foregoing data flow processing methods provided in the embodiments of the present invention can be implemented. Referring to FIG. 10, the control device 5 includes:
a configuring unit 51, configured to receive a request message sent by a switch device, and determine, according to the request message, packet processing information required by the switch device, where the request message includes an action parameter requested by the switch device, and an identifier of a to-be-processed packet or a to-be-processed packet; and
a sending unit 52, configured to send the packet processing information determined by the configuring unit to the switch device, so that the switch device executes a corresponding operation according to the packet processing information, where the packet processing information includes at least one of the action parameter, the to-be-processed packet or the identifier of the to-be-processed packet, action execution information, a to-be-executed action list, and an instruction for continuing action execution.

In the control device provided in this embodiment of the present invention, a switch device processes a packet according to a flow entry that is sent by the control device and received in advance, and when interruption occurs for the packet processed by the switch device, the switch device sends a request message to the control device, so that the control device configures, according to the request message, packet processing information that corresponds to the to-be-processed packet of the switch device, and the switch device completes an operation of the to-be-processed packet according to the packet processing information, thereby solving a problem of operation interruption caused because the switch device is incapable of processing a corresponding user packet by using a received flow entry that is sent in advance by the control device, improving working efficiency between network devices, and preventing incorrect processing of packets.

Optionally, the sending unit 52 is further configured to: before the request message sent by the switch device is received and the packet processing information required by the switch device is determined according to the request message, send a flow entry to the switch device in advance, where the flow entry includes matching information of a data flow and an action list required for the data flow.

Optionally, referring to FIG. 11, the configuring unit 51 includes:
a configuring subunit 511, configured to acquire, according to the request message, a requested parameter corresponding to the request message, configure a corresponding action list according to the request message, and generate the packet processing information according to the requested parameter and the action list, so that the switch device executes the corresponding operation according to the packet processing information.

In the control device provided in this embodiment of the present invention, when interruption occurs during processing of a to-be-processed packet by a switch device, the switch device requests, by using a request message, the control device to configure, according to the request message, a corresponding parameter, so that the switch device receives packet processing information sent by the control device and completes the processing of the to-be-processed packet, thereby solving a problem of operation interruption caused because the switch device is incapable of processing a corresponding user packet by using a received flow entry that is sent in advance by the control device, improving working efficiency between network devices, and preventing incorrect processing of packets.

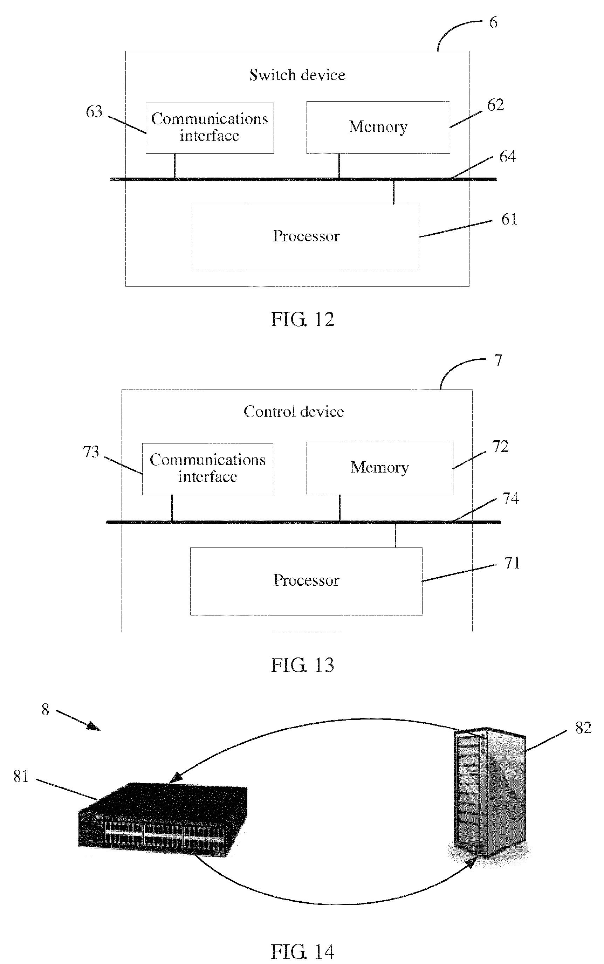

An embodiment of the present invention provides a switch device 6. Referring to FIG. 12, the device may be built in or be itself a micro-processing computer, such as: a general-purpose computer, a customized computer, or a portable device such as a mobile terminal or a tablet computer. The switch device 6 includes: at least one processor 61, a memory 62, a communications interface 63, and a bus 64. The at least one processor 61, the memory 62, and the communications interface 63 are connected and communicate with each other by using the bus 64.

The bus 64 may be an industry standard architecture (Industry Standard Architecture, ISA for short) bus, a peripheral component interconnect (Peripheral Component, PCI for short) bus, an extended industry standard architecture (Extended Industry Standard Architecture, EISA for short) bus or the like. The bus 64 may include an address bus, a data bus, a control bus and the like. For convenience of illustration, in FIG. 12, only one bold line is used for illustration, but it does not mean that there is only one bus or one type of bus.

The memory 62 is configured to store executable program code, where the program code includes a computer operation instruction. The memory 62 may include a high-speed RAM memory, and may further include a non-volatile memory (non-volatile memory), for example, at least one magnetic disk storage.

The processor 61 may be a central processing unit (Central Processing Unit, CPU for short), or an application specific integrated circuit (Application Specific Integrated Circuit, ASIC for short), or one or more integrated circuits that are configured to implement this embodiment of the present invention.

The communications interface 63 is mainly configured to implement communication between the apparatuses in this embodiment.

The processor 61 is configured to send a request message to a control device by using the at least one communications interface 63, where the request message includes an action parameter requested by the switch device, and an identifier of a to-be-processed packet or a to-be-processed packet.

The processor 61 is further configured to receive, by using the at least one communications interface 63, packet processing information that is sent according to the request message by the control device.

The processor 61 is further configured to execute, according to the packet processing information, an operation corresponding to the to-be-processed packet.

In the switch device provided in this embodiment of the present invention, the switch device processes a packet according to a flow entry that is sent by a control device and received in advance, and when interruption occurs for the packet processed by the switch device, the switch device sends a request message to the control device, so that the control device configures, according to the request message, packet processing information that corresponds to the to-be-processed packet of the switch device, and the switch device completes an operation of the to-be-processed packet according to the packet processing information, thereby solving a problem of operation interruption caused because the switch device is incapable of processing a corresponding user packet by using a received flow entry that is sent in advance by the control device, improving working efficiency between network devices, and preventing incorrect processing of packets.

Optionally, the processor 61 is further configured to: before sending the request message to the control device by using the at least one communications interface 63, receive, by using the at least one communications interface 63, a flow entry that is sent in advance by the control device, and match the to-be-processed packet according to the flow entry, where the flow entry includes matching information of a data flow and an action list required for the data flow.

The processor 61 is further configured to: if a corresponding action parameter is found missing when the action list is executed, send the request message to the control device by using the at least one communications interface 63.

Further, optionally, the processor 61 is further configured to send, by using the at least one communications interface 63, action execution information to the control device by using the request message and/or store the action execution information locally by using the memory 62, where the action execution information includes one or more of an executed action identifier, an unexecuted action identifier, an executed action list, and an unexecuted action list.

Optionally, the processor 61 is further configured to acquire, according to the packet processing information, the to-be-processed packet or the identifier of the to-be-processed packet, the action parameter, the action execution information, and/or an instruction for continuing action execution, and execute the corresponding operation according to the packet processing information.

Optionally, the packet processing information includes at least one of the action parameter, the to-be-processed packet or the identifier of the to-be-processed packet, the action execution information, a to-be-executed action list, and the instruction for continuing action execution.

In the switch device provided in this embodiment of the present invention, when interruption occurs during processing of a to-be-processed packet by the switch device, the switch device requests, by using a request message, a control device to configure, according to the request message, a corresponding parameter, so that the switch device receives packet processing information sent by the control device and completes the processing of the to-be-processed packet, thereby solving a problem of operation interruption caused because the switch device is incapable of processing a corresponding user packet by using a received flow entry that is sent in advance by the control device, improving working efficiency between network devices, and preventing incorrect processing of packets.

An embodiment of the present invention provides a control device 7. Referring to FIG. 13, the device may be built in or be itself a micro-processing computer, such as: a general-purpose computer, a customized computer, or a portable device such as a mobile terminal or a tablet computer. The control device 7 includes: at least one processor 71, a memory 72, a communications interface73, and a bus 74. The at least one processor 71, the memory 72, and the communications interface 73 are connected and communicate with each other by using the bus 74.

The bus 74 may be an industry standard architecture (Industry Standard Architecture, ISA for short) bus, a peripheral component interconnect (Peripheral Component, PCI for short) bus, an extended industry standard architecture (Extended Industry Standard Architecture, EISA for short) bus or the like. The bus 74 may include an address bus, a data bus, a control bus and the like. For convenience of illustration, in FIG. 13, only one bold line is used for illustration, but it does not mean that there is only one bus or one type of bus.

The memory 72 is configured to store executable program code, where the program code includes a computer operation instruction. The memory 72 may include a high-speed RAM memory, and may further include a non-volatile memory (non-volatile memory), for example, at least one magnetic disk storage.

The processor 71 may be a central processing unit (Central Processing Unit, CPU for short), or an application specific integrated circuit (Application Specific Integrated Circuit, ASIC for short), or one or more integrated circuits that are configured to implement this embodiment of the present invention.

The communications interface 73 is mainly configured to implement communication between the apparatuses in this embodiment.

The processor 71 is configured to receive, by using the at least one communications interface 73, a request message sent by a switch device, and determine, according to the request message, packet processing information required by the switch device, where the request message includes an action parameter requested by the switch device, and an identifier of a to-be-processed packet or a to-be-processed packet.

The processor 71 is further configured to send the packet processing information to the switch device by using the at least one communications interface 73, so that the switch device executes a corresponding operation according to the packet processing information, where the packet processing information includes at least one of the action parameter, the to-be-processed packet or the identifier of the to-be-processed packet, action execution information, a to-be-executed action list, and an instruction for continuing action execution.

In the control device provided in this embodiment of the present invention, a switch device processes a packet according to a flow entry that is sent by the control device and received in advance, and when interruption occurs for the packet processed by the switch device, the switch device sends a request message to the control device, so that the control device configures, according to the request message, packet processing information that corresponds to the to-be-processed packet of the switch device, and the switch device completes an operation of the to-be-processed packet according to the packet processing information, thereby solving a problem of operation interruption caused because the switch device is incapable of processing a corresponding user packet by using a received flow entry that is sent in advance by the control device, improving working efficiency between network devices, and preventing incorrect processing of packets.

Optionally, the processor 71 is further configured to: before receiving, by using the at least one communications interface 73, the request message sent by the switch device, and determining, according to the request message, the packet processing information required by the switch device, send a flow entry to the switch device in advance by using the at least one communications interface 73, where the flow entry includes matching information of a data flow and an action list required for the data flow.

Optionally, the processor 71 is further configured to acquire, according to the request message, a requested parameter corresponding to the request message, configure a corresponding action list according to the request message, and generate the packet processing information according to the requested parameter and the action list, so that the switch device executes the corresponding operation according to the packet processing information.

In the control device provided in this embodiment of the present invention, when interruption occurs during processing of a to-be-processed packet by a switch device, the switch device requests, by using a request message, the control device to configure, according to the request message, a corresponding parameter, so that the switch device receives packet processing information sent by the control device and completes the processing of the to-be-processed packet, thereby solving a problem of operation interruption caused because the switch device is incapable of processing a corresponding user packet by using a received flow entry that is sent in advance by the control device, improving working efficiency between network devices, and preventing incorrect processing of packets.

An embodiment of the present invention provides a communications system 8. Referring to FIG. 14, the communications system includes: a switch device 81 and a control device 82, where the switch device 81 is the switch device shown in FIG. 8 or FIG. 9, and the control device 82 is the control device shown in FIG. 10 or FIG. 11; or
the switch device 81 is the switch device shown in FIG. 12, and the control device 82 is the control device shown in FIG. 13.

In the communications system provided in this embodiment of the present invention, a switch device processes a packet according to a flow entry that is sent by a control device and received in advance, and when interruption occurs for the packet processed by the switch device, the switch device sends a request message to the control device, so that the control device configures, according to the request message, packet processing information that corresponds to the to-be-processed packet of the switch device, and the switch device completes an operation of the to-be-processed packet according to the packet processing information, thereby solving a problem of operation interruption caused because the switch device is incapable of processing a corresponding user packet by using a received flow entry that is sent in advance by the control device, improving working efficiency between network devices, and preventing incorrect processing of packets.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or a disk storage medium, or another magnetic storage device, or any other medium that can carry or store expected program code in the form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present invention includes a compact disc (CD), a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

In summary, what is described above is merely exemplary embodiments of the technical solutions of the present invention, but is not intended to limit the protection scope of the present invention. Any modification, equivalent replacement, or improvement made without departing from the spirit and principle of the present invention shall fall within the protection scope of the present invention.

## Claims

1. A data flow processing method, comprising:
sending a request message to a control device, wherein the request message comprises an action parameter requested by a switch device, and an identifier of a to-be-processed packet or a to-be-processed packet;
receiving packet processing information that is sent according to the request message by the control device; and
executing, according to the packet processing information, an operation corresponding to the to-be-processed packet.

2. The method according to claim 1, before the sending a request message to a control device, further comprising:
receiving a flow entry that is sent in advance by the control device, and matching the to-be-processed packet according to the flow entry, wherein the flow entry comprises matching information of a data flow and an action list required for the data flow; and
if a corresponding action parameter is found missing when the action list is executed, sending the request message to the control device.

3. The method according to claim 1 or 2, wherein the sending a request message to a control device comprises:
sending action execution information to the control device by using the request message and/or storing the action execution information locally, wherein the action execution information comprises one or more of an executed action identifier, an unexecuted action identifier, an executed action list, and an unexecuted action list.

4. The method according to any one of claims 1 to 3, wherein the executing, according to the packet processing information, an operation corresponding to the to-be-processed packet comprises:
acquiring, according to the packet processing information, the to-be-processed packet or the identifier of the to-be-processed packet, the action parameter, the action execution information, and/or an instruction for continuing action execution, and executing the corresponding operation according to the packet processing information.

5. The method according to any one of claims 1 to 4, wherein the packet processing information comprises:
at least one of the action parameter, the to-be-processed packet or the identifier of the to-be-processed packet, the action execution information, a to-be-executed action list, and the instruction for continuing action execution.

6. A data flow processing method, comprising:
receiving a request message sent by a switch device, and determining, according to the request message, packet processing information required by the switch device, wherein the request message comprises an action parameter requested by the switch device, and an identifier of a to-be-processed packet or a to-be-processed packet; and
sending the packet processing information to the switch device, so that the switch device executes a corresponding operation according to the packet processing information, wherein the packet processing information comprises at least one of the action parameter, the to-be-processed packet or the identifier of the to-be-processed packet, action execution information, a to-be-executed action list, and an instruction for continuing action execution.

7. The method according to claim 6, before the receiving a request message sent by a switch device, and determining, according to the request message, packet processing information required by the switch device, further comprising:
sending a flow entry to the switch device in advance, wherein the flow entry comprises matching information of a data flow and an action list required for the data flow.

8. The method according to claim 6 or 7, wherein the receiving a request message sent by a switch device, and determining, according to the request message, packet processing information required by the switch device comprises:
acquiring, according to the request message, a requested parameter corresponding to the request message, configuring a corresponding action list according to the request message, and generating the packet processing information according to the requested parameter and the action list, so that the switch device executes the corresponding operation according to the packet processing information.

9. A switch device, comprising:
a sending unit, configured to send a request message to a control device, wherein the request message comprises an action parameter requested by the switch device, and an identifier of a to-be-processed packet or a to-be-processed packet;
a storage unit, configured to receive packet processing information that is sent according to the request message by the control device; and
a configuring unit, configured to execute, according to the packet processing information, an operation corresponding to the to-be-processed packet.

10. The device according to claim 9, wherein the device comprises:
a matching unit, configured to: before the request message is sent to the control device, receive a flow entry that is sent in advance by the control device, and match the to-be-processed packet according to the flow entry, wherein the flow entry comprises matching information of a data flow and an action list required for the data flow; and
the matching unit is further configured to: if a corresponding action parameter is found missing when the action list is executed, send the request message to the control device.

11. The device according to claim 9 or 10, wherein:
the sending unit is specifically configured to send action execution information to the control device by using the request message and/or store the action execution information locally, wherein the action execution information comprises one or more of an executed action identifier, an unexecuted action identifier, an executed action list, and an unexecuted action list.

12. The device according to any one of claims 9 to 11, wherein:
the configuring unit is specifically configured to acquire, according to the packet processing information, the to-be-processed packet or the identifier of the to-be-processed packet, the action parameter, the action execution information, and/or an instruction for continuing action execution, and execute the corresponding operation according to the packet processing information.

13. The device according to any one of claims 9 to 12, wherein the packet processing information comprises:
at least one of the action parameter, the to-be-processed packet or the identifier of the to-be-processed packet, the action execution information, a to-be-executed action list, and the instruction for continuing action execution.

14. A control device, comprising:
a configuring unit, configured to receive a request message sent by a switch device, and determine, according to the request message, packet processing information required by the switch device, wherein the request message comprises an action parameter requested by the switch device, and an identifier of a to-be-processed packet or a to-be-processed packet; and
a sending unit, configured to send the packet processing information determined by the configuring unit to the switch device, so that the switch device executes a corresponding operation according to the packet processing information, wherein the packet processing information comprises at least one of the action parameter, the to-be-processed packet or the identifier of the to-be-processed packet, action execution information, a to-be-executed action list, and an instruction for continuing action execution.

15. The device according to claim 14, wherein:
the sending unit is further configured to: before the request message sent by the switch device is received and the packet processing information required by the switch device is determined according to the request message, send a flow entry to the switch device in advance, wherein the flow entry comprises matching information of a data flow and an action list required for the data flow.

16. The device according to claim 14 or 15, wherein the configuring unit comprises:
a configuring subunit, configured to acquire, according to the request message, a requested parameter corresponding to the request message, configure a corresponding action list according to the request message, and generate the packet processing information according to the requested parameter and the action list, so that the switch device executes the corresponding operation according to the packet processing information.

17. A switch device, comprising: a processor and a memory that are connected by using a data bus, and at least one communications interface that is connected to the processor and the memory separately, wherein:
the processor is configured to send a request message to a control device by using the at least one communications interface, wherein the request message comprises an action parameter requested by the switch device, and an identifier of a to-be-processed packet or a to-be-processed packet;
the processor is further configured to receive, by using the at least one communications interface, packet processing information that is sent according to the request message by the control device; and
the processor is further configured to execute, according to the packet processing information, an operation corresponding to the to-be-processed packet.

18. The device according to claim 17, wherein:
the processor is further configured to: before sending the request message to the control device by using the at least one communications interface, receive, by using the at least one communications interface, a flow entry that is sent in advance by the control device, and match the to-be-processed packet according to the flow entry, wherein the flow entry comprises matching information of a data flow and an action list required for the data flow; and
the processor is further configured to: if a corresponding action parameter is found missing when the action list is executed, send the request message to the control device by using the at least one communications interface.

19. The device according to claim 17 or 18, wherein:
the processor is further configured to send, by using the at least one communications interface, action execution information to the control device by using the request message and/or store the action execution information locally by using the memory, wherein the action execution information comprises one or more of an executed action identifier, an unexecuted action identifier, an executed action list, and an unexecuted action list.

20. The device according to any one of claims 17 to 19, wherein:
the processor is further configured to acquire, according to the packet processing information, the to-be-processed packet or the identifier of the to-be-processed packet, the action parameter, the action execution information, and/or an instruction for continuing action execution, and execute the corresponding operation according to the packet processing information.

21. The device according to any one of claims 17 to 20, wherein the packet processing information comprises:
the to-be-processed packet or the identifier of the to-be-processed packet, the action execution information, and/or a to-be-executed action list, and/or the instruction for continuing action execution.

22. A control device, comprising: a processor and a memory that are connected by using a data bus, and at least one communications interface that is connected to the processor and the memory separately, wherein:
the processor is configured to receive, by using the at least one communications interface, a request message sent by a switch device, and determine, according to the request message, packet processing information required by the switch device, wherein the request message comprises an action parameter requested by the switch device, and an identifier of a to-be-processed packet or a to-be-processed packet; and
the processor is further configured to send the packet processing information to the switch device by using the at least one communications interface, so that the switch device executes a corresponding operation according to the packet processing information, wherein the packet processing information comprises at least one of the action parameter, the to-be-processed packet or the identifier of the to-be-processed packet, action execution information, a to-be-executed action list, and an instruction for continuing action execution.

23. The device according to claim 22, wherein:
the processor is further configured to: before receiving, by using the at least one communications interface, the request message sent by the switch device, and determining, according to the request message, the packet processing information required by the switch device, send a flow entry to the switch device in advance by using the at least one communications interface, wherein the flow entry comprises matching information of a data flow and an action list required for the data flow.

24. The device according to claim 22 or 23, wherein:
the processor is further configured to acquire, according to the request message, a requested parameter corresponding to the request message, configure a corresponding action list according to the request message, and generate the packet processing information according to the requested parameter and the action list, so that the switch device executes the corresponding operation according to the packet processing information.

25. A communications system, comprising a switch device and a control device, wherein the switch device is the switch device according to any one of claims 9 to 13, and the control device is the control device according to any one of claims 14 to 16; or
the switch device is the switch device according to any one of claims 17 to 21, and the control device is the control device according to any one of claims 22 to 24.
